# EUROPEAN PATENT APPLICATION

(11) **EP 1 591 920 A1**
(43) Date of publication of application: **02.11.2005**
(21) Application number: 05102101.2
(22) Date of filing: 17.03.2005
(51) Int. Cl.: G06F 17/30, G06F 17/60

(54) **System and method for optimizing paid listing yield**

(30) Priority: 22.03.2004 US 805870
(71) Applicant: MICROSOFT CORPORATION, Redmond, WA 98052 (US)
(72) Inventor: Watson, Eric B., Redmond, WA 98052 (US); Moss, Kenneth A., Redmond, WA 98052 (US)
(74) Representative: Zimmer, Franz-Josef

(57) **Abstract**

A system, method, and computer-accessible medium are provided for optimizing the use of paid placement space on a search Web page. The system and method obtain conversion data associated with the paid listing and calculate a conversion rate and paid yield for the listing based on the listing's performance. The system and method further select and place the listing on the search results Web page based on the paid yield to optimize the return on paid placement space on the Web page for the search engine operator as well as the value of the paid listing for the advertiser.

## Description

### CROSS-REFERENCE TO RELATED APPLICATION

This application claims the benefit of U.S. Provisional Application No. 60/535,353, filed January 9, 2004, which is hereby claimed under 35 U.S.C. § 119.

### FIELD OF THE INVENTION

In general, the present invention relates to computer software and search engines and, in particular, to systems and methods for optimizing the placement of paid listings to maximize advertising revenue for a search engine operator.

### BACKGROUND OF THE INVENTION

The Internet search engine has become an important source of revenue for the service providers that operate them. The revenue is primarily generated from the display of advertisements to search engine users. Increasingly popular is the use of paid advertisements along with the list of results that the search engine generates. The advertiser bids on popular search terms in exchange for which the search engine prominently lists their advertisement along with the other unpaid search results returned for the bidded search term. For example, when a user types in the search term "digital camera," the search results list might include a paid listing for Nikon brand digital cameras preceding a relevant but unpaid listing for an independent digital photography Web site that reviews several brands of digital cameras.

The practice of including paid listings along with the search results is commonly referred to as pay-per-click (PPC) or pay-for-performance advertising, since the advertiser pays only when the user actually clicks on the listing (as opposed to more conventional Internet advertising, referred to as pay-per-impression, where the advertiser pays whenever the listing is displayed). Usually, more than one advertiser will bid on popular search terms, so the placement of the PPC listing is typically determined by the amount the bid and/or the performance of the listing as measured by the click-through rate. Those listings associated with the highest bids and having the best performance are usually displayed in the most prominent locations available on the search page. The amount of advertising revenue generated from the PPC listings depends in part on the bid price that the advertiser bid for the listing, as well as on performance. For example, one advertising revenue model in common use today is to charge the advertisers the bid price each time a user clicks on their paid listing.

One of the problems with the PPC advertising revenue model is that low-performing PPC listings, i.e., those with a low click-through rate, generate little revenue, regardless of how much the advertiser might have bid for the search term. Since the amount of space in which to display PPC listings in a search results page is limited, search engine operators cannot afford to waste valuable display space on low-performing listings. Thus, search engine operators must monitor performance closely and quickly replace listings when a particular PPC listing is not performing well.

Another problem with the PPC advertising revenue model is that most search engine operators require certain minimum bid amounts to place PPC listings on their search results pages. The minimum bid might not meet the needs of some advertisers whose own sales revenue streams cannot justify the cost of placing the minimum bid. At best, the PPC advertising revenue model is an approximation of the value of a PPC listing to an advertiser. Not every click generated by the PPC listing will necessarily generate sales revenue for the advertiser/merchant--indeed, oftentimes users will only browse the destination Web site associated with a PPC listing, somewhat akin to window-shopping. Thus, the real value of a PPC listing may be lower than can be approximated by the PPC advertising revenue model. Search terms may remain unbidded as a result of an inadequate way to price the PPC listing more proportionate to what advertisers can reasonably be expected to pay.

On the other hand, in some cases the real value of a PPC listing may be significantly higher than can be approximated by the PPC advertising revenue model. For example, the destination Web site may be particularly lucrative due to a higher than average amount of sales volume or dollars generated when users are referred to the site, e.g., a Web site that sells large-ticket items such as cars, or connects users with sellers of real estate or other profitable markets. For these advertisers, the PPC advertising revenue model is a bargain that represents a lost opportunity for the search engine operators to generate advertising revenue more proportionate to the real value of the listing. Thus, the challenge for the search engine operator is to help advertisers maximize the return on their advertising dollars, while at the same time helping search engine operators to maximize their own return on the limited amount of available space in which to display paid listings in a search results page.

### SUMMARY OF THE INVENTION

To address the above-described issues, a system, method, and computer-accessible medium for optimizing the use of paid placement space on a search Web page is provided. The system and method optimize the return on paid placement space for the search engine operator while at the same time optimizing the value of the paid listing for the advertiser.

In accordance with one aspect of the present invention, the system and method obtain conversion data associated with the paid listing and calculate a conversion rate for the listing based on the listing's performance. The system and method further determine from the conversion rate a paid yield associated with the listing. The system and method further select and place the listing on the search results Web page based on the paid yield to optimize the return on paid placement space on the Web page for the search engine operator as well as the value of the paid listing for the advertiser.

In accordance with another aspect of the present invention, the conversion data represents a monetized event associated with a transaction resulting from the user's referral to a destination Web site via the paid listing placed on the search results Web page. The conversion data may be obtained directly from the destination Web site, or from an intermediary that collects the data on behalf of the destination Web site and distributes that data back to the search engine server that placed the paid listing.

In accordance with still another aspect of the present invention, the conversion data preferably conforms to a common format shared by the search engine server and destination Web sites, but may alternatively have a specific format that is unique to a particular destination Web site, as long as the data is accessible to the search engine server.

In accordance with yet other aspects of the present invention, a computer-accessible medium for optimizing the use of paid placement space on a search Web page is provided. The computer-accessible medium comprises data structures and computer-executable components comprising a paid listing yield optimizer for optimizing the return on paid placement space for the search engine operator while at the same time optimizing the value of the paid listing for the advertiser. The data structures define paid listing, performance, and conversion data in a manner that is generally consistent with the above-described method. Likewise, the computer-executable components are capable of performing actions generally consistent with the above-described method.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a depiction of an exemplary paid listing yield optimization system and one suitable operating environment in which the use of paid placement space on a search Web page may be optimized in accordance with the present invention;
FIGURE 2 is a block diagram depicting in further detail an arrangement of certain computing components of the search engine server of FIGURE 1 for implementing an embodiment of the present invention;
FIGURE 3 is a pictorial diagram of a search engine user interface displaying paid listings using a conventional bidded pay-for-performance model;
FIGURE 4 is a block diagram of exemplary search result listings, their corresponding bid amounts and performance, and their advertising revenue generated when using a bid and pay-for-performance revenue model;
FIGURE 5 is a block diagram of exemplary search result listings as in FIGURE 4, their corresponding conversion rates and performance, and advertising revenue generated when using a revenue sharing model in accordance with an embodiment of the present invention;
FIGURE 6 is a pictorial diagram of an exemplary search engine user interface in which paid listings have been optimized based on paid yield in accordance with an embodiment of the present invention; and
FIGURES 7A-7B are flow diagrams illustrating the logic performed in conjunction with the search engine server of FIGURES 1 and 2 for optimizing the use of paid placement space on a search Web page in accordance with an embodiment of the present invention.

### DETAILED DESCRIPTION OF A PREFERRED EMBODIMENT

The following discussion is intended to provide a brief, general description of a computing system suitable for implementing various features of an embodiment of the invention. While the computing system will be described in the general context of a personal and server computer or other types of computing devices usable in a distributed computing environment, where complementary tasks are performed by remote computing devices linked together through a communication network, those skilled in the art will appreciate that the invention may be practiced with many other computer system configurations, including multiprocessor systems, minicomputers, mainframe computers, and the like. In addition to the more conventional computer systems described above, those skilled in the art will recognize that the invention may be practiced on other computing devices including laptop computers, tablet computers, personal digital assistants (PDAs), cellular telephones, and other devices upon which computer software or other digital content is installed.

While aspects of the invention may be described in terms of programs or processes executed by a Web browser in conjunction with a personal computer or programs or processes executed by a search engine in conjunction with a server computer, those skilled in the art will recognize that those aspects also may be implemented in combination with other program modules. Generally, program modules include routines, subroutines, programs, processes, components, data structures, functions, interfaces, objects, etc., which perform particular tasks or implement particular abstract data types.

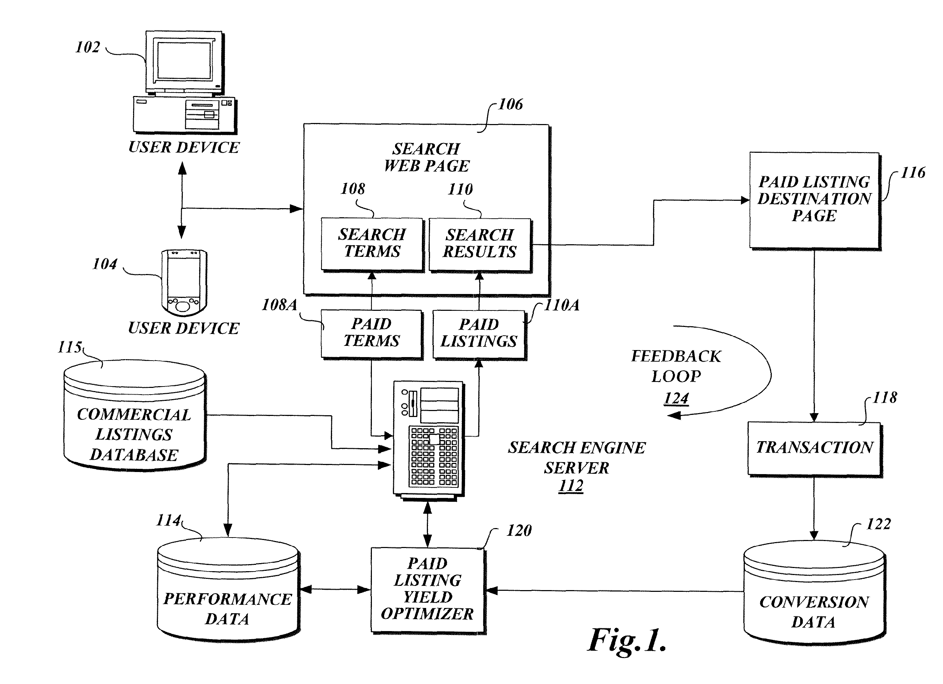

FIGURE 1 is a depiction of an exemplary paid listing optimization system 100 and one suitable operating environment in which the use of paid placement space on a search Web page may be optimized in accordance with an embodiment of the present invention. As shown, the operating environment includes a search engine server 112 that is generally responsible for providing front-end user communication with various user devices, such as devices 102 and 104, and back-end searching services. The front-end communication provided by the search engine server 112 may include, among other services, generating text and/or graphics organized as a search Web page 106 using hypertext transfer protocols in response to information and search queries received from the various user devices, such as a computer system 102 and a personal digital assistant (PDA) 104. The back-end searching services provided by the search engine server 112 may include, among other services, using the information and search queries received from the various user devices 102, 104 to search for relevant Web content, obtain paid listings, and track Web page, search result, and paid listing performance.

In the environment shown in FIGURE 1, the search engine server 112 generates a search Web page 106 into which a user may input search terms 108 to initiate a search for Web content via the Internet. The search terms 108 are transmitted to a search engine server 112 that uses the terms to perform a search for Web content that is relevant to the search terms 108. The search engine server 112 relays the relevant Web content as a set of search results 110 for display to the user in the search Web page 106. The search engine server 112 also searches a commercial listings database 115 for paid listings that may be relevant to the search terms 108, and places one or more of those paid listings into a paid placement space on the search Web page 106 in exchange for an advertising fee assessed to the advertiser that supplied the paid listing.

In the environment shown in FIGURE 1, the user devices 102, 104 communicate with a search engine server 112 via one or more computer networks, such as the Internet. Protocols and components for communicating via the Internet are well known to those of ordinary skill in the art of computer network communications. Communication between user devices 102, 104 and the search engine server 112 may also be enabled by local wired or wireless computer network connections. The search engine server 112 depicted in FIGURE 1 may also operate in a distributed computing environment, which can comprise several computer systems that are interconnected via communication links, e.g., using one or more computer networks or direct connections. However, it will be appreciated by those of ordinary skill in the art that the server 112 could equally operate in a computer system having fewer or greater number of components than are illustrated in FIGURE 1. Thus, the depiction of the operating environment in FIGURE 1 should be taken as exemplary and not limiting the scope of the claims that follow.

In one suitable implementation, the paid listing optimization system 100 enables a search engine operator to advantageously optimize the use of the paid placement space on a search Web page 106 to benefit both the search engine operator in the form of increased advertising revenue as well as the advertiser in the form of reduced expense and/or risk in advertising expenditures. The paid listing optimization system 100 includes a paid listing yield optimizer 120 that operates in conjunction with stored performance data 114 and stored conversion data 122 to calculate a conversion rate and resulting paid yield associated with a paid listing, and to select and place paid listings for display in the paid placement space of the search Web page 106 based on their paid yields. In a preferred embodiment, those paid listings with higher paid yields are preferentially selected and placed on the paid listing space of the search Web page 106 over those paid listings with lower paid yields.

In one embodiment, the stored performance data 114 includes the number of impressions of a particular paid listing, i.e., the number of times the listing is displayed to the user on a search Web page 106 in response to the entry of a search term 108, as well as the number of clicks on the listing, i.e., the number of times a user clicks on the listing after it is displayed. The search engine server 112 is further configured to detect and filter out fraudulent clicks as is known in the art, such as spam clicking, simulated clicks by robots, and other suspect clicks such as multiple clicks from the same IP address within a certain amount of time or from unidentified sources. In one embodiment, the performance of a particular listing is measured by the listing's click-through rate (CTR), which is determined by comparing the number of times the listing is displayed to the number of times the user clicks on the listing after it is displayed, i.e., dividing the number of impressions by the number of clicks. The stored performance data 114 may also include other data tracked by the search engine server 112, such as the location of the listing when it was displayed on the search Web page 106 and other characteristics of the listing that may influence performance, such as the color, size, font, animation, graphics, and adjacent listing performance data. In some embodiments, other measurements of the performance of a paid listing may be employed without departing from the scope of the claims that follow.

In response to the search term entry, a search engine server 112 serves a user with search results 110 that the user can view via the search Web page 106. The search terms 108 may include ordinary, unbidded and unpaid terms (not shown) on which advertisers have not bid or otherwise paid for, as well as paid terms 108A on which advertisers have bid or otherwise agreed to pay a share of any sales revenue generated from corresponding paid listings that the search engine server 112 selects and places for display in the paid placement space of the search Web page 106 whenever the paid term is entered. Accordingly, the search results 110 may comprise both ordinary unpaid listings (not shown) that are obtained from the searchable Web content, as well as paid listings 110A that may be obtained from a commercial listings database 115 that is accessible to the search engine server 112. The paid listings 110A include those that correspond to the paid terms 108A and may thus be subject to a revenue-sharing arrangement as described above, but may also include the more conventional listings subject to a pay-for-performance advertising revenue model, such as the previously described pay-per-click (PPC) advertising revenue model. In addition the paid listings might also include other types of commercial listings, such as paid directory listings and other sponsored listings assembled by the search engine operator.

In one embodiment, the stored conversion data 122 includes data that represents a monetized event that occurs as a result of a user referral to a destination page associated with a paid listing 110A, i.e., the conversion of a referral from a paid listing into sales revenue for the advertiser. The monetized event can be any event that is capable of being monetized such as a sale of a product or services, or another referral to an individual, a business, or other Web site. The monetized event information is captured and sent back to the search engine server 112 as depicted in FIGURE 1 in feedback loop 124. In one embodiment, the monetized event may be captured in the form of a transaction 118 that is generated directly by the advertiser or operator associated with the destination Web site 116. In an alternate embodiment, the transaction 118 may be generated indirectly on behalf of the advertiser or operator associated with the destination Web site 116 by a third party vendor, such as might be generated by a shopping basket technology vendor as part of providing sales and advertising tracking services to Web merchants. In still other embodiments, the monetized event may be proactively captured by the search engine operator that displayed the paid listing 110A that generated the user referral to the destination Web site 116. Proactive capture of the monetized event may be performed using techniques that are known in the art, such as intelligent agents that can track user navigation from the paid listing 110A to the destination Web site 116 and report back to the originating search engine server 112 any monetized event that occurs as a result of the referral. In a preferred embodiment, the conversion data conforms to a common format shared by the search engine server and destination Web sites, but may alternatively have a specific format that is unique to a particular destination Web site, as long as the data is accessible to the search engine server.

In operation, the search engine server 112 determines whether the search term 108 entered by the user is an ordinary, unpaid term, or a paid term 108A. The search engine operator performs a search using the search term and, in addition, uses the paid search term 108A to further determine in accordance with the paid listing yield optimizer 120, the performance data 114, and the conversion data 122, which of the corresponding paid listings 110A from the stored commercial listings 115 should be selected for inclusion in the search results 110 and placed for display in the search Web page 106. When the displayed paid listings 110A are clicked, they link the user to a destination Web page 116 corresponding to the paid listing and as provided by the advertiser.

In one embodiment, as the user clicks on the paid listings 110A that comprise the search results 110 displayed on the search Web page 106, the search engine server 112 captures the resulting performance data 114 for each paid listing 110A, including data that may aid in interpreting the performance of the listing, such as the context of the listing when it was clicked, i.e., the location of the listing on the Web page 106, the amount of display area that the listing occupied, the neighboring listings, and the display characteristics of the listing, e.g., the color, highlighting, animation, etc. From the performance data 114, the paid listing optimization system 100 is able to derive and interpret certain statistical information about the listing, such as the above-described CTR.

In one embodiment, the search engine server 112 further obtains the above-described conversion data 122 for each paid listing 110A, preferably an indication of the sales revenue that a referral to a destination Web site 116 has generated for the destination Web site's operator. The search engine server 112 stores and aggregates the conversion data 122 for use by the search engine 112 to compute a conversion rate and paid yield of particular paid listings 110A, and to further determine, in conjunction with the performance data 114, the selection and placement of those paid listings based on their paid yield.

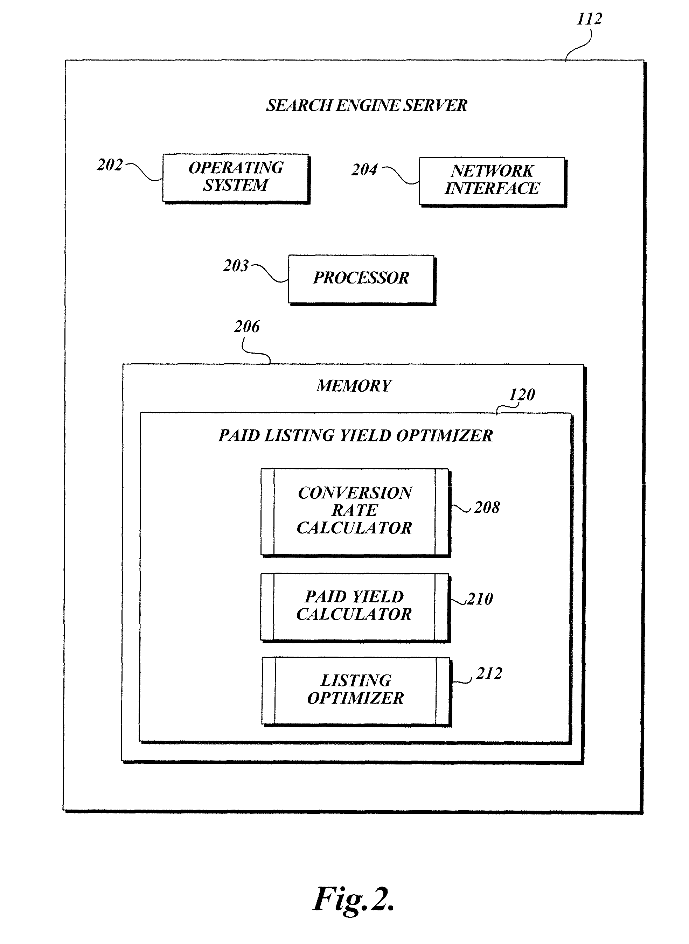

FIGURE 2 is a block diagram depicting in further detail an arrangement of certain exemplary computing components of the search engine server 112 that are responsible for the operation of the paid listing optimization system 100 shown in FIGURE 1. Specifically, the search engine server 112 is shown including an operating system 202, processor 203, and memory 206 to implement executable program instructions for the general administration and operation of the search engine server 112. The search engine server 112 further includes a network interface 204 to communicate with a network, such as the Internet, to respond to user search terms 108 and provide search results 110. Suitable implementations for the operating system 202, processor 203, memory 206, and network interface 204 are known or commercially available, and are readily implemented by persons having ordinary skill in the art―particularly in light of the disclosure herein.

The memory 206 of the search engine server 112 includes computer-executable program instructions comprising the paid listing yield optimizer process 120. In some embodiments, the memory 206 may further include various stored data such as the above-described search terms 108 and search results 110, performance data 114, and conversion data 122. The paid listing yield optimizer process 120 uses the performance data 114 and conversion data 122 to compute the conversion rate and paid yield of paid listings 110A, and to select and place paid listings on the search Web page 106 based on the computed paid yields, as will be described in further detail below. In one embodiment, the paid listing yield optimizer 120 includes a conversion rate calculator process 208, a paid yield calculator process 210, and a paid listing optimizer process 212.

The conversion rate calculator process 208 determines the conversion rate associated with a particular paid listing 110A. The conversion rate is the average conversion revenue generated per referral, i.e., the average of the actual dollar amount of sales revenue generated for each click-through to the destination Web site 116. The conversion rate is determined by dividing the total conversion dollar amount represented in the listing's conversion data 122 by the CTR represented in the listing's performance data 114. For example, when a particular paid listing for the search term "dog food" has a performance measurement of a CTR of 10 (10 click-throughs per 100 impressions) and where one of the ten users who clicked through to the destination Web site purchased $50.00 of dog food while the other nine users purchased none, then the conversion rate calculator process 208 calculates a conversion rate of $5.00 per click-through. A different paid listing might also have a conversion rate of $5.00 per click-through where the listing has an identical performance measurement of ten CTR, but where two of the ten users who clicked through to the destination Web site each purchased $25.00 of dog food, while the other eight users purchased none. In the latter case, the conversion rate is the same as in the first case, since the aggregated conversion amount for the listing is also $50.00, even though the individual purchase amounts are smaller.

In yet another example, a paid listing might have a very high performance measurement of 50 CTR, where half of the users who clicked through to the destination Web site 116 each purchased a product from the site for $10.00, resulting in an aggregated conversion amount of $250.00. In this case, the conversion rate calculator process 208 calculates an average conversion rate of $5.00 per click-through as well, since $250.00 divided by 50 CTR equals $5.00.

The paid yield calculator process 210 determines the paid yield associated with a particular paid listing 110A. In one embodiment, the paid yield equals the conversion rate multiplied by the performance. Therefore, even though the conversion rates for a particular paid listing might be the same, the paid yields may differ depending on performance. In one embodiment, the paid yield may also depend on the revenue sharing percentage negotiated with the advertiser. For example, using the above-described examples of three paid listings that each have conversion rates of $5, if each advertiser negotiated a comparable revenue sharing percentage of ten percentage points, the listing having the higher CTR of 50 will result in the highest paid yield of $25.00 ($5.00 X 50 CTR = $250.00 X 10% = $25.00). But if the revenue sharing percentage for the listing having the higher CTR is only two percentage points, then all of the listings will result in the same paid yield of only $5.00. ($5.00 X 50 CTR= $250.00 X 2%= $5.00, which is the same as $5.00 X 10 CTR= $50.00 X 10% = $5.00).

The paid listing optimizer process 212 operates in conjunction with the conversion rate calculator and paid yield calculator processes 208, 210 to enable the search engine server 112 to preferentially select and place those paid listings having the highest paid yield on the search Web page 106. The paid listings 110A having the highest paid yields are generally those listings having a combined performance and conversion rate that represents a good outcome for the advertiser in terms of increased sales revenue generated from a high number of referrals from the search Web page to the destination Web page and/or a large amount of sales revenue per referral. The listings having the highest yields are also those that have been shown to have a good outcome for the search engine operator as well, in terms of a large amount of advertising revenue, earned both in the volume of referrals, as well as in the amount of advertising revenue earned per referral, i.e., the search engine operator's share of the advertiser's sales revenue.

In operation, the paid listing optimizer process 212 uses the calculated paid yield to determine which of the paid listings 110A associated with the paid term 108A to select and include in the search results or display in the paid listings section of the search results Web page. In a preferred embodiment, those paid listings having the best, i.e., the highest paid yields are selected and displayed over other listings. Of course, it is to be understood that other methods of selecting and displaying the paid listings may be employed to complement the selection based on paid yield without departing from the scope of the claims that follow. For example, in the case of a tie, i.e., when the calculated paid yields for the listings are the same, the listing with the highest performance or the largest revenue sharing percentage might be selected and displayed over the other listings. Moreover, other factors in the selection of a listing may temporarily trump selection based on paid yield, such as when a search operator is trying out new listings for which a reliable performance has not yet been determined.

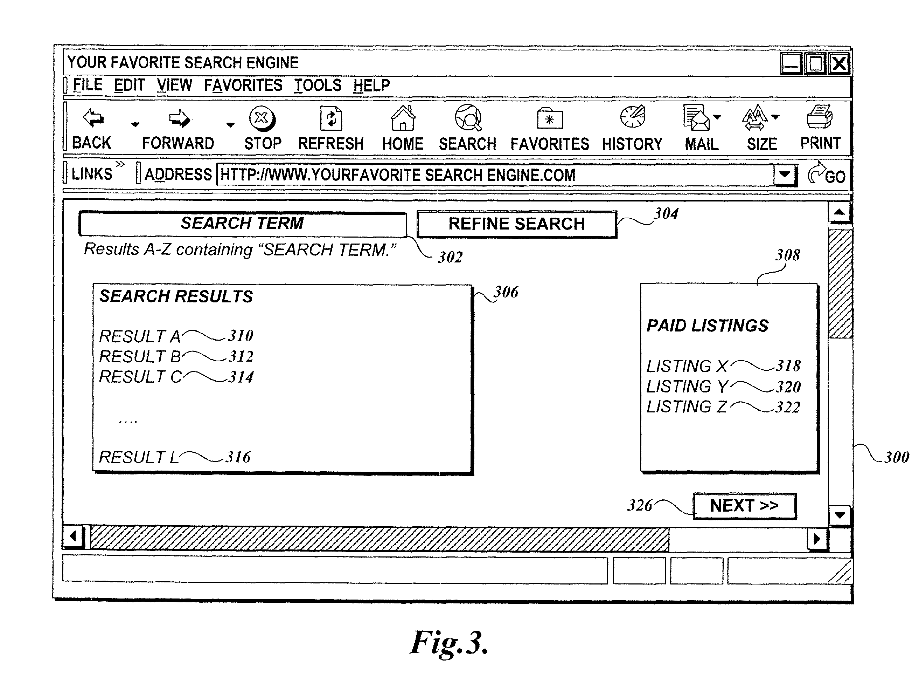

FIGURE 3 illustrates a browser program 300 displaying a Web page 106 in which is depicted a search engine user interface displaying paid listings using a conventional bidded pay-for-performance model. The Web page 106 may be generated by the search engine server 112 and delivered to the user's computing device 102, 104 via the Internet. The search engine user interface displays the previously entered search terms 108 in the text box 302 and prompts the user to refine the search with additional search terms, if desired, using the command button labeled "REFINE SEARCH" 304. The search engine user interface displays the search results 110 on the Web page 106 in FIGURE 3, typically in a paid listings section 308, adjacent to a search results section 306 in which the unpaid listings are displayed. In one embodiment, the paid listings 110A may also be included in the search results section 306, or in other areas of the Web page 106. In the illustrated example, the Web page 106 includes the relevant search results obtained for the search term in search results section 306, Result A 310, Result B 312, and Result C 314, etc., through Result L 316. The Web page 106 further includes the selected paid listings obtained for the search term in the paid listings section 308, Listing X 318, Listing Y 320, and Listing Z 322 displayed in accordance with a conventional bid and pay-for-performance advertising revenue model. The search engine user interface may include other hypertext links, such as a "Next" link 326 providing a link to additional Web pages not illustrated. The Next link 326 may produce, for example, additional search results and paid listings relevant to search term listed in box 302.

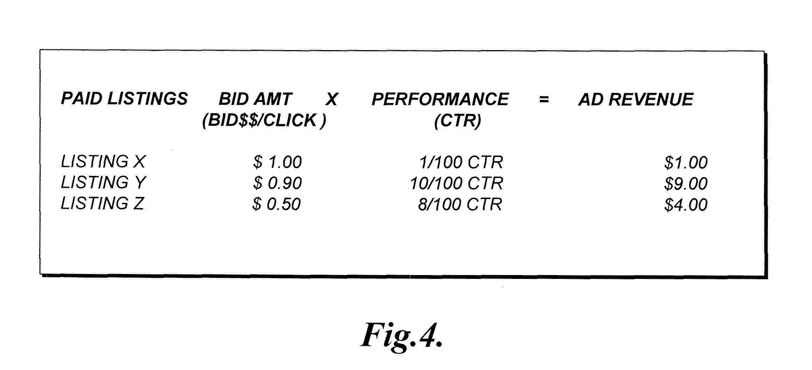

For purposes of illustration, FIGURE 4 is a block diagram of the paid listings shown in FIGURE 3, with their corresponding bid amounts and performance and their corresponding advertising revenue that might be earned when using a conventional bid and pay-for-performance advertising revenue model. As shown, Listing X 318, Listing Y 320, and Listing Z 322 are listed in descending order by their bid amounts of $1.00, $0.90, and $0.50, respectively, meaning that advertiser X will pay $1.00 every time a user clicks on Listing X, but advertisers Y and Z will only pay $0.90 and $0.50, respectively, each time a user clicks on Listings Y and Z. However, the performance of Listing X is a disappointing 1/100 CTR, i.e., one click per 100 impressions, while the performance of Listings Y and Z are better at 10/100 CTR and 8/100 CTR, respectively, i.e., ten and eight clicks per 100 impressions. Thus, even though advertiser X bid the most for the search term entered in text box 302, the amount of advertising revenue generated for the search engine operator from Listing X is only $1.00, lower than the $9.00 and $4.00 generated from Listings Y and Z, respectively. Leaving Listing X in the most prominent position at the top of the paid listings section 308 is not the optimal use of the section for the search engine operator.

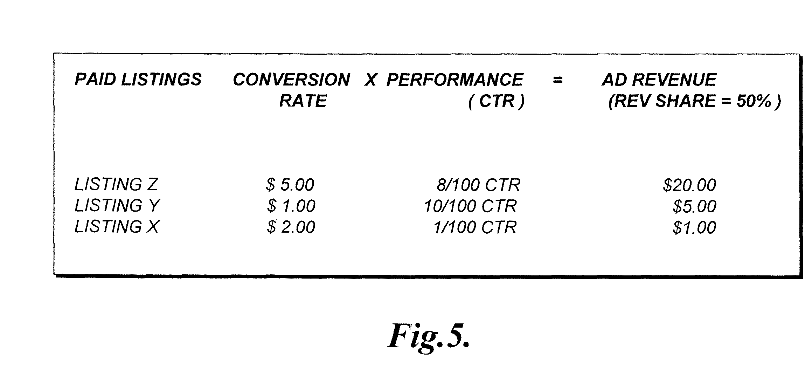

FIGURE 5 is a block diagram of the same paid listings as in FIGURE 4, but this time with their corresponding conversion rates and performance, as well as their corresponding paid yield when using a revenue sharing model in accordance with an embodiment of the present invention. As shown, Listing X 318, Listing Y 320, and Listing Z 322 are listed in order by their advertising revenue of $20.00, $5.00, and $1.00, respectively. For purposes of illustration, each advertiser has negotiated a comparable revenue sharing arrangement of 50 percentage points. The conversion rate for Listing Z 322 at $5.00 turned out to be higher than for Listings X and Y, at $2.00 and $1.00, respectively. Given the varying performance of each listing, Listing Z ends up generating significantly more advertising revenue for the search operator than under the bid pay-for-performance model, i.e., $20.00 instead of only $4.00. On the other hand Listing Y ends up generating less advertising revenue for the search operator, $5.00 instead of $9.00, whereas Listing X remained the same at $1.00. Overall, the outcome is better for the search engine operator and advertiser Y, the same for advertiser X, and not as good for advertiser Z. Nevertheless, advertiser Z has still earned a significant amount of sales revenue from paid Listing Z at no risk, since the advertiser only pays the search engine operator when they earn sales revenue from a referral. The cost of placing the paid listings that are selected and displayed in accordance with an embodiment of the invention is therefore advantageously more predictable for the advertisers, while at the same time more lucrative for the search engine operator.

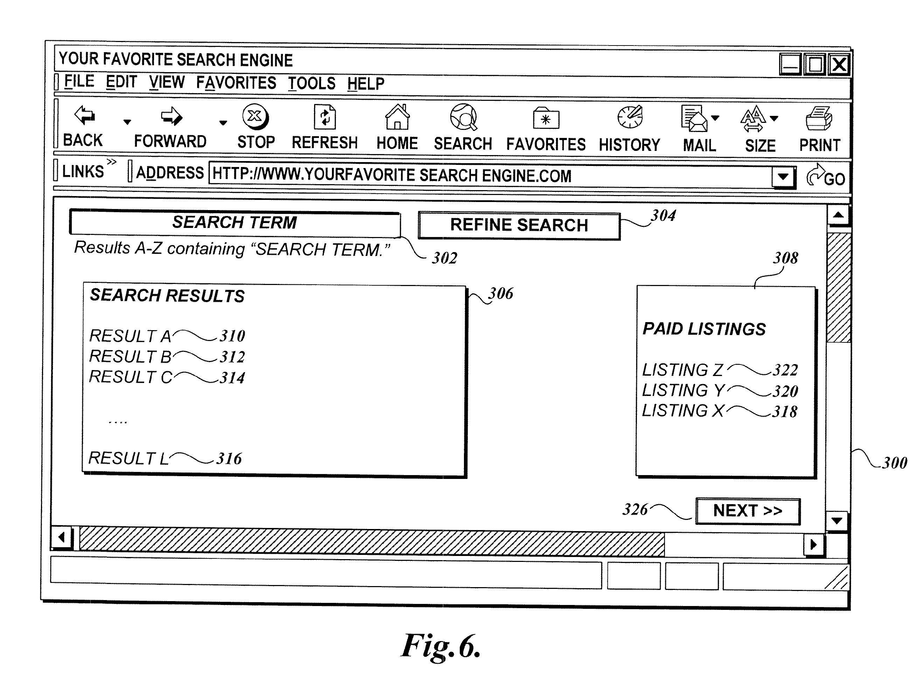

FIGURE 6 is a pictorial diagram a browser program 300 displaying a Web page 106, in which is depicted an exemplary search engine user interface similar to that of FIGURE 3, but here illustrating an optimal use of the paid placement place of paid listings section 308, where the paid listings are displayed in accordance with an embodiment of the present invention. As shown, the Web page 106 includes the selected paid listings obtained for the search term in the paid listings section 308, Listing X 318, Listing Y 320, and Listing Z 322, the same as before. This time, however, the paid listing yield optimizer process 120 optimizes the use of the paid listings section 308 in accordance with an embodiment of the present invention. As shown in the illustrated example, the optimal use of the paid listings section 308 is to select the same listings, but display them in a different order--Listing Z 322 first, followed by Listing Y 320, and Listing X 318, i.e., in order by their paid yields in accordance with an embodiment of the invention and as described above with reference to FIGURE 5. In other scenarios, of course, different listings might have been selected for display instead of Listing X 318, Listing Y 320, and Listing Z 322, or perhaps one or more of Listing X 318, Listing Y 320, and Listing Z 322 might have been replaced with a more lucrative listing, in either case without departing from the scope of the claims that follow. In still other scenarios, the selection and display of the listings may depend on paid yield in combination with other factors, also without departing from the scope of the claims that follow.

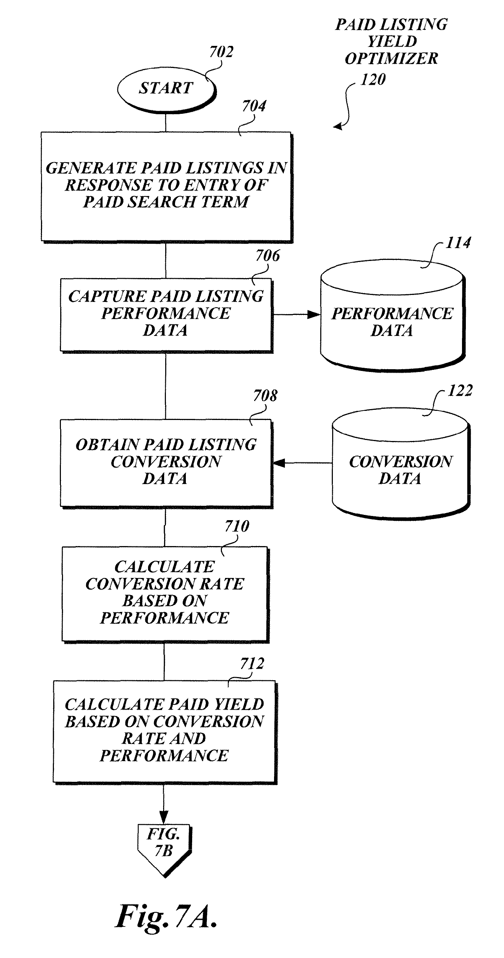

FIGURES 7A-7B are flow diagrams illustrating the logic performed in conjunction with the search engine server of FIGURES 1 and 2 for optimizing the use of paid placement space on a search Web page in accordance with an embodiment of the present invention. The paid listing yield optimizer process 120 begins at the start oval 702 and continues at processing block 704 where the search engine server 112 generates paid listings in response to a user entry of a paid search term. In one embodiment, the paid listings are obtained from a commercial listings database 115 that is accessible to the search engine server 112. Processing continues at processing block 706, where the search engine server 112 obtains stored performance data 114 for the paid listings as previously captured by the search engine server 112. The performance data 114 will be used in determining the selection and placement of paid listings on a search Web page in accordance with an embodiment of the invention. At process block 708, the paid listing yield optimizer process 120 obtains paid listing conversion data for each paid listing either directly or indirectly from a destination Web site associated with the paid listing as previously described. The conversion data represents the sales revenue earned by the destination Web site as a result of the display of the paid listing by the search engine operator. Specifically, the conversion data represents the dollar amount attributed to a monetized event that occurred as a result of a user referral from the paid listing to the destination Web site, i.e. as a result of a user clicking on the paid listing and navigating to the destination Web site.

In one embodiment, processing continues at process block 710, where the paid listing yield optimizer 120 calculates a conversion rate for each paid listing based on the paid listing's performance. The conversion rate, as previously described, represents the average dollar amount of the destination Web site's sales revenue associated with a paid listing based on the listing's performance. The paid listing yield optimizer 120 continues at processing block 712, where the conversion rate and performance of each listing are used to calculate the listing's paid yield. As previously described, the paid yield is calculated by multiplying the conversion rate by the performance. In one embodiment, the advertising revenue associated with the paid yield of a paid listing is determined by applying to the paid yield the listing's negotiated revenue sharing percentage, i.e., the percentage that is typically negotiated when the advertiser places the listing with the search engine.

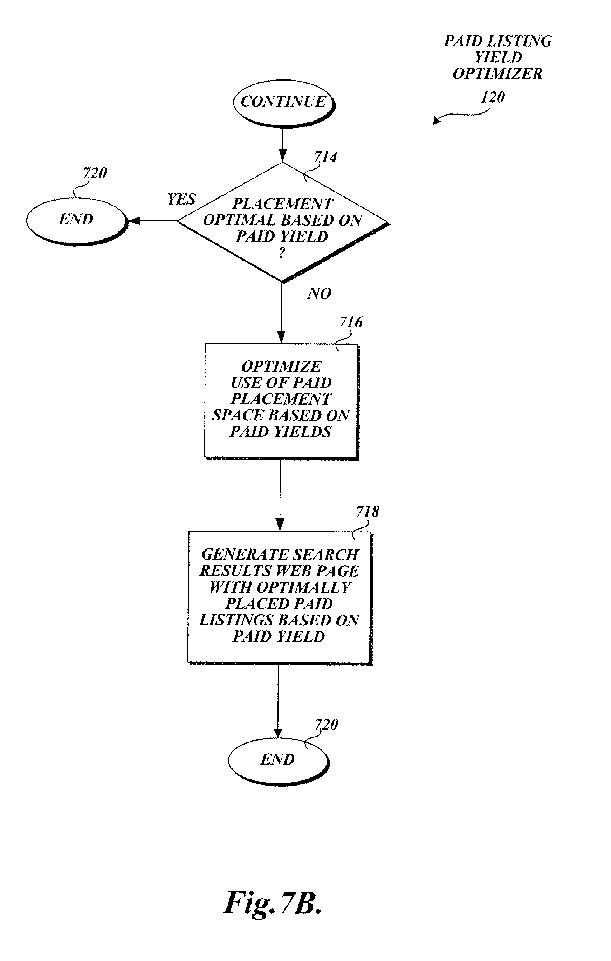

Processing continues at decision block 714 in FIGURE 7B, where the paid listing yield optimizer 120 determines whether the placement of the paid listings generated by the search engine server 112 in response to a user entry of a search term is optimal based on the listings' paid yields. If so, then processing terminates at termination oval 720. If not, then processing continues at processing block 716, where the paid listing yield optimizer 120 optimizes the use of the paid listing portion of the search Web page by selecting and placing the paid listings based on their corresponding paid yields. Processing continues at processing block 718 where the search engine server 112 generates a search Web page for display to the user in which the use of paid listing portion of the display has been optimized based on the listings' paid yields in accordance with an embodiment of the invention. The paid listing yield optimizer process 120 terminates at termination oval 720.

While the presently preferred embodiments of the invention have been illustrated and described, it will be appreciated that various changes may be made therein without departing from the spirit and scope of the invention. For example, in one embodiment of the present invention, the paid listing optimization system 100 processes may be implemented in combination with other types of search engine optimizations to benefit both the search engine operator in terms of advertising revenue, and the advertisers in terms of reduced advertising expense and risk. For example, processes to implement a bid-for-performance advertising revenue model may be implemented for certain search terms at the same time as implementing paid listing optimization system 100 processes for certain other search terms in accordance with an embodiment of the present invention. Thus, for example, in some embodiments, the paid listing result optimization system 100 may be limited in application to only some search terms, to only some markets, or during certain time periods, or any combination thereof.

## Claims

1. A method for optimizing the use of paid placement space in a search results Web page, the method comprising:
monitoring a performance of a paid listing placed for a fee in a search results Web page;
receiving conversion data associated with the paid listing, the conversion data representing sales revenue resulting from a user referral to a destination Web site associated with the paid listing;
determining a paid yield associated with the paid listing based on the latest performance and conversion data, wherein the paid yield represents sales revenue resulting from all user referrals to the destination Web site over a period oftime; and
placing the paid listing in the search results Web page based on the paid yield.

2. The method of Claim 1, wherein the user referral to the destination Web site occurs when a user clicks on the paid listing to navigate to the destination Web site, and the performance of the paid listing is a click-through rate, where the click-through rate is derived from a number of times the paid listing is placed in the search results Web page, as compared to a number of times the user clicks on the paid listing after being displayed.

3. The method of Claim 1, wherein the placement fee is a percentage of the paid yield associated with the paid listing.

4. The method of Claim 1, further comprising selecting the paid listing for placing in the search results Web page based on the paid yield.

5. The method of Claim 1, wherein the conversion data includes data that captures a monetized event that occurred as a result of the user referral to the destination Web site associated with the paid listing, the monetized event including at least one of a sale of a product, a sale of a service, and another referral to an entity associated with the destination Web site, the entity including at least one of an individual, a business, and another Web site.

6. The method of Claim 1, wherein placing the paid listing in the search results Web page based on the paid yield includes placing the paid listing having a higher paid yield before the paid listing having a lower paid yield.

7. The method of Claim 4, wherein selecting the paid listing for placing in the search results Web page based on the paid yield includes selecting the paid listing having a higher paid yield over the paid listing having a lower paid yield.

8. The method of Claim 5, wherein the conversion data includes a dollar value associated with the monetized event.

9. The method of Claim 8, wherein determining a paid yield associated with the paid listing based on the latest performance and conversion data, includes calculating a conversion rate, where the conversion rate equals the total dollar value associated with the monetized events occurring as the result of user referrals to the destination Web site divided by the total number of user referrals over the period of time.

10. The method of Claim 9, where the period of time is the time it takes to achieve a predefined number of placements of the paid listing in the search results Web page.

11. The method of Claim 10, wherein the predefined number of placements is equal to a number of impressions used to measure the performance of the paid listing.

12. A paid listing yield optimization system comprising:
a performance data repository containing performance data for a paid listing placed in a search results Web page, the performance data indicating how many times users visited a destination Web site by clicking on the paid listing;
a conversion data repository containing conversion data for the paid listing, the conversion data indicating how much money was generated when a user visited the destination Web site; and
a processor to calculate a paid yield associated with the paid listing based on current performance and conversion data, the paid yield indicating how much money was generated when users visited the destination Web site over a period of time, and to place the paid listing on the search results Web page in exchange for a portion of the paid yield.

13. The system of Claim 12, wherein the processor is to further select which paid listing to place on the search results Web page in accordance with the latest paid yield.

14. The system of Claim 12, wherein the performance data further indicates how many times the processor placed the paid listing on the search results Web page, and the processor measures a performance of the paid listing by comparing the number of visits to the number of placements.

15. The system of Claim 14, wherein to calculate the paid yield associated with the paid listing includes to calculate a conversion rate equaling an average amount of money generated per visit and to multiply the conversion rate by the performance.

16. The system of Claim 12, wherein the processor receives updates to the conversion data repository from the destination Web site.

17. The system of Claim 12, wherein the processor receives updates to the conversion data repository from a third party vendor that tracks how much money was generated when the user visited the destination Web site.

18. The system of Claim 12, wherein the processor receives updates to the conversion data repository from an intelligent agent initiated by the processor when the user clicked on the paid listing to visit the destination Web site.

19. The system of Claim 12, wherein the conversion data repository includes data associated with different destination Web sites, but conforming to a single common data format.

20. The system of Claim 12, wherein the conversion data repository includes data associated with different destination Web sites, each destination Web site using a data format specific to that destination Web site.

21. A computer-accessible medium having instructions for making optimal use of paid placement space on a search results user interface, the instructions comprising:
record a number of times a user navigates from a paid listing placed in a search results user interface to a destination Web site associated with the listing;
capture an amount of purchases generated at the destination Web site as a result of the user navigation;
calculate a paid yield of the paid listing based on the number of user navigations and amount of purchases; and
place the paid listing on the search results user interface in exchange for a share of the paid yield.

22. The computer-accessible medium of Claim 21, further comprising an instruction to record a number of times the paid listing is placed in the search results user interface and an instruction to measure a performance of the paid listing where the performance is a comparison between the number of times the user navigated to the destination Web site and the number of times the paid listing was placed.

23. The computer-accessible medium of Claim 22, wherein the instruction to calculate the paid yield includes an instruction to calculate a conversion rate associated with the paid listing that indicates an average amount of purchases per user navigation and the paid yield equals the conversion rate multiplied by the measured performance.

24. The computer-accessible medium of Claim 21, wherein the instruction to capture an amount of purchases generated at the destination Web site as a result of the user navigation includes an instruction to generate an intelligent agent when the user navigates to the destination Web site, where the intelligent agent tracks user activity at the destination Web site and reports back the amount of the user's purchase.

25. The computer-accessible medium of Claim 21, wherein the instruction to capture an amount of purchases generated at the destination Web site as a result of the user navigation includes an instruction to receive data reporting the amount of the user's purchase.

26. The computer-accessible medium of Claim 25, wherein the reported data is generated by the destination Web site.

27. The computer-accessible medium of Claim 25, wherein the reported data is generated by a third party vendor that tracks purchase activity at the destination Web site.

28. The computer-accessible medium of Claim 25, wherein the reported data is generated in a common format irrespective of the destination Web site with which the data is associated.

29. The computer-accessible medium of Claim 25, wherein the reported data is generated in a common format irrespective of whether the data is generated by one of a destination Web site, an intelligent agent, and a third party vendor.

30. The computer-accessible medium of Claim 21, wherein the instruction to capture an amount of purchases generated at the destination Web site as a result of the user navigation includes capturing a monetized event that occurred as a result of the user navigating to the destination Web site, the monetized event including at least one of a sale of a product, a sale of a service, and a user navigation to an entity associated with the destination Web site, the entity including at least one of an individual, a business, and another Web site.
